# EUROPEAN PATENT APPLICATION

(11) **EP 3 855 846 A1**
(43) Date of publication of application: **28.07.2021**
(21) Application number: 18933745.4
(22) Date of filing: 21.09.2018
(51) Int. Cl.: H04W 72/12, H04W 72/04

(54) **USER TERMINAL**

(71) Applicant: NTT DOCOMO, INC., Chiyoda-ku Tokyo 100-6150 (JP)
(72) Inventor: YOSHIOKA, Shohei, Tokyo 100-6150 (JP); TAKEDA, Kazuki, Tokyo 100-6150 (JP); NAGATA, Satoshi, Tokyo 100-6150 (JP); WANG, Lihui, Beijing 100190 (CN)
(74) Representative: Hoffmann Eitle
(86) International application number: PCT/JP2018/035227
(87) International publication number: WO 2020/059151

(57) **Abstract**

User terminal according to one aspect of the present disclosure includes: a receiving section configured to receive information indicating a configuration of a slot; and a control section configured to control transmission of uplink control information included in an uplink control channel when the number of symbols that can be used for transmission of the uplink control channel in the slot is smaller than the number of symbols specified for the uplink control channel and when a resource for the uplink control channel overlaps a resource for another uplink channel in the slot.

## Description

### Technical Field

The present disclosure relates to user terminal in a next-generation mobile communication system.

### Background Art

In the universal mobile telecommunications system (UMTS) network, the specifications of long term evolution (LTE) have been drafted for the purpose of further increasing high speed data rates, providing lower delays and the like (see Non Patent Literature 1). Further, the specifications of LTE Advanced (LTE-A, LTE Rel. 10, 11, 12, 13) have been drafted for the purpose of further increasing the capacity and advancement of LTE (LTE Rel. 8, 9).

Successor systems of LTE (for example, Future Radio Access (FRA), 5th generation mobile communication system (5G), 5G+ (plus), New Radio (NR), New radio access (NX), Future generation radio access (FX), LTE Rel. 14 or 15 or later versions) are also under study.

In the existing LTE system, user terminal transmits uplink control information (UCI) by using an uplink control channel (for example, a physical uplink control channel (PUCCH)) or an uplink shared channel.

The UCI may include at least one of delivery acknowledgement information (hybrid automatic repeat request-acknowledge (HARQ-ACK), acknowledge/non-ack (ACK/NACK)), scheduling request (SR), or channel state information (CSI) for downlink shared channels.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In time division duplex (TDD) of future radio communication systems (hereinafter also referred to as NRs), it is under study to control slot configurations (for example, at least one of the number and position of a symbol for downlink (DL) (DL symbol), a symbol for uplink (UL) (UL symbol), a slot for DL (DL slot), and a slot for UL (UL slot) in a given period).

Therefore, in the NR, the number of symbols that can be used for an uplink control channel (for example, a PUCCH) in the slot can be smaller than the number of symbols specified for the uplink control channel. In this case, it is considered to stop the transmission of the uplink control channel, but whether to drop the UCI included in the uplink control channel becomes a problem.

Therefore, an object of the present disclosure is to provide user terminal capable of appropriately controlling the transmission of UCI in a slot in which the number of symbols that can be used for an uplink control channel is smaller than the number of symbols specified for the uplink control channel.

### Solution to Problem

User terminal according to one aspect of the present disclosure includes: a receiving section configured to receive information indicating a configuration of a slot; and a control section configured to control transmission of uplink control information included in an uplink control channel when the number of symbols that can be used for transmission of the uplink control channel in the slot is smaller than the number of symbols specified for the uplink control channel and when a resource for the uplink control channel overlaps a resource for another uplink channel in the slot.

### Advantageous Effects of Invention

According to one aspect of the present disclosure, transmission of UCI in a slot in which the number of symbols that can be used for an uplink control channel is smaller than the number of symbols specified for the uplink control channel can be appropriately controlled.

### Brief Description of Drawings

Fig. 1 is a diagram illustrating an example of UCI transmission control in NR.
Fig. 2 is a diagram illustrating another example of UCI transmission control in NR.
Fig. 3 is a diagram illustrating an example of UCI transmission control according to a first aspect.
Fig. 4 is a diagram illustrating an example of UCI transmission control according to a second aspect.
Fig. 5 is a diagram illustrating an example of UCI transmission control according to another aspect.
Fig. 6 is a diagram illustrating an example of a schematic configuration of a radio communication system according to one embodiment.
Fig. 7 is a diagram illustrating an example of a configuration of a base station according to one embodiment.
Fig. 8 is a diagram illustrating an example of a configuration of user terminal according to one embodiment.
Fig. 9 is a diagram illustrating an example of a hardware configuration of a base station and user terminal according to one embodiment.

### Description of Embodiments

In the NR, if the number of symbols for uplink (UL symbols) in a slot is not sufficient for transmission of the uplink control channel (e.g., a physical uplink control channel (PUCCH)), it is considered that the user terminal (UE) drops (cancels) the periodic transmission of uplink control information (UCI).

Here, the UCI (PUCCH) transmitted periodically may include, for example, at least one of the following.
- Scheduling request (SR)
- Channel state information (CSI) transmitted periodically (periodic CSI (P-CSI))
- CSI transmitted using resources specified as semi-persistent (permanent or semi-persistent) (semi-persistent CSI (SP-CSI))
- Delivery acknowledgement information (hybrid automatic repeat request-acknowledge (HARQ-ACK), HARQ-ACK information, ACK/NACK, A/N or the like) for the downlink shared channel (physical downlink shared channel (PDSCH)) transmitted by semi-persistent scheduling (SPS)

For example, when the number of symbols that can be used for the PUCCH for the SR transmission occasion (the period during SR transmission, transmission period) is smaller than the value given by higher layer parameters (e.g., nrofSYmbols) in a given slot, the UE need not transmit the PUCCH in the slot. Here, the higher layer parameter is a parameter given by higher layer signaling.

Further, in the NR, it is under study that the configuration of one or more slots included within a given period is given by higher layer parameters (for example, TDD-UL-DL-ConfigCommon, TDD-UL-DL-ConfigDedicated, or the like) .

The configuration of one or more slots within a given period provided by the higher layer parameters may include, for example, at least one of the following.
- Consecutive number of slots containing only downlink (DL) symbols (DL symbols) (DL slots) (nrofDownlinkSlots)
- Consecutive number of DL symbols (nrofDownlinkSymbols)
- Consecutive number of slots containing only UL symbols (UL slots) (nrofUplinkSlots)
- Consecutive number of UL symbols (nrofUplinkSymbols)
- Index of each slot (slotIndex)
- Transmission direction of each symbol in each slot (for example, all DL symbol (allDownlink), all UL symbol (allUplink) or explicit instruction or the like), and note that the explicit instruction may include a consecutive number of the DL symbols or UL symbols in a slot (nrofDownlinkSlots, nrofUplinkSymbols).

In the NR, the UE need not transmit an uplink signal in the slot or symbol configured as DL by the higher layer parameter. Here, for example, the uplink signal may include at least one of an uplink shared channel (for example, physical uplink shared channel (PUSCH), an uplink control channel (for example, PUCCH), a random access channel (for example, physical random access channel (PRACH), an uplink reference signal (for example, sounding reference signal (SRS)), and the like.

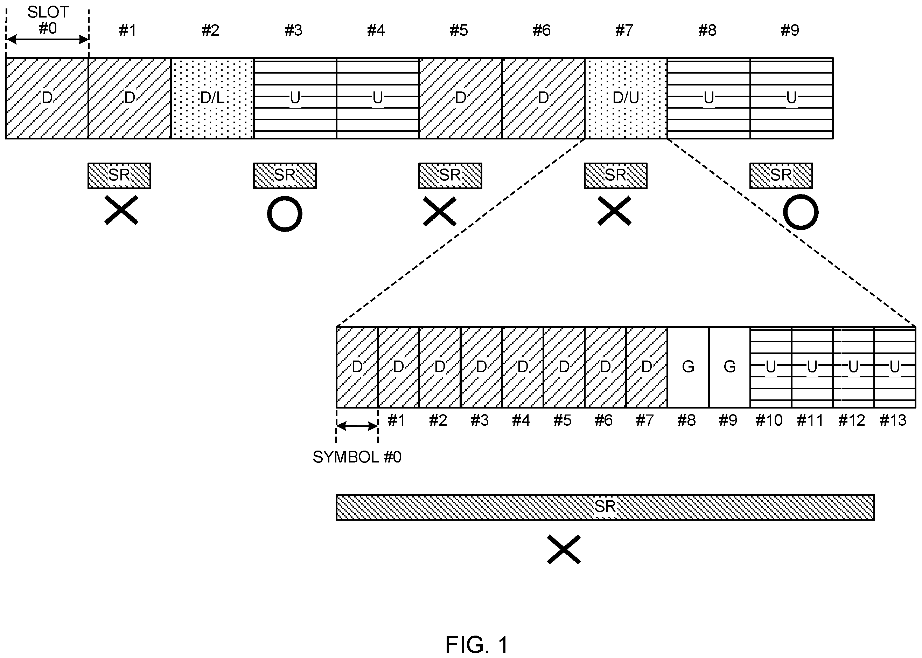

Fig. 1 is a diagram illustrating an example of UCI transmission control in NR. In Fig. 1, for example, it is assumed that the above-mentioned configurations of slots #0 to #9 are configured by the higher layer parameter. Note that the configuration of each slot illustrated in Fig. 1 is merely an example and is not limited to that illustrated.

Further, Fig. 1 illustrates an SR having a 2-slot cycle as an example of the UCI transmitted periodically. Further, Fig. 1 illustrates an example in which the number of symbols for the PUCCH (nrofSYmbols) for SR transmission is configured by 13 symbols.

For example, in Fig. 1, slots #0, #1, #5, and #6 are configured as DL slots, and slots #3, #4, #8, and #9 are configured as UL slots. Further, slots #2 and #7 are configured as slots (D/U slots) including DL symbols, UL symbols, and symbols for switching between DL and UL (also referred to as guard period (GP)). Further, slot #7 is configured as DL symbol consecutive number 7 and UL symbol consecutive number 4.

As illustrated in Fig. 1, the UE does not transmit an SR in DL slots #1 and #5. On the other hand, the UE transmits an SR in UL slots #3 and #9. In D/U slot #7, because the number of UL symbols is 4, the number of symbols available for an SR (i.e., 4) is smaller than 13 symbols for the PUCCH for SR transmission given by the higher layer parameter (nrofSYmbols). Therefore, in D/U slot #7 of Fig. 1, the UE does not transmit an SR.

Further, in the NR, when a plurality of PUCCHs satisfying a given condition overlap in a given slot or when one or more PUCCHs and a PUSCH satisfying a given condition overlap in a given slot, it is under study to multiplex one or more types of UCI to a given resource (e.g., a PUCCH or a PUSCH).

For example, it is under study that when a plurality of PUCCHs satisfying a given condition overlap in a given slot, the UE multiplexes the UCI to be transmitted in each of the plurality of PUCCHs to a single PUCCH and transmits the UCI.

Further, it is under study that when one or more PUCCHs and a PUSCH satisfying a given condition overlap in a given slot, the UE multiplexes the UCI to be transmitted in the one or more PUCCHs to the PUSCH and transmits the UCI.

Here, the given condition may be, for example, at least one of the following.
- The PUCCH for HARQ-ACK with respect to the PDSCH is after a given period with reference to a final symbol of the PDSCH (or a symbol following the final symbol)
- The PUSCH scheduled by the downlink control information (DCI) (for example, DCI format 0_0 or 0_1, UL grant) is after a given period with reference to a final symbol of the DCI (or a symbol following the final symbol).

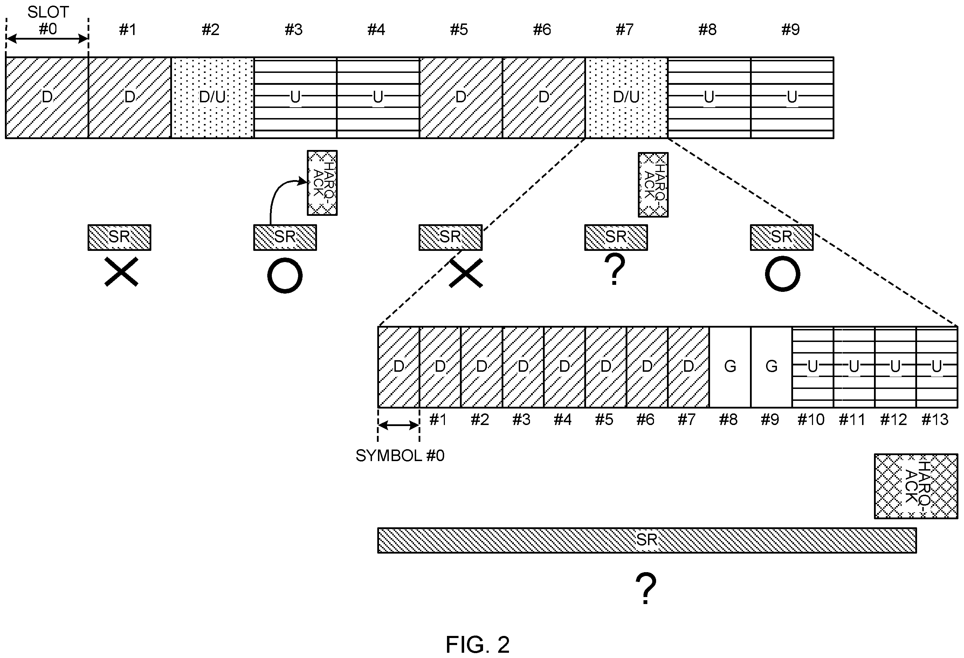

Fig. 2 is a diagram illustrating another example of UCI transmission control in NR. Fig. 2 differs from Fig. 1 in that, in slots #3 and #7, a plurality of PUCCHs satisfying the above given condition (for example, a PUCCH for periodic transmission of an SR and a PUCCH for HARQ-ACK) overlap. The following mainly describes the difference from Fig. 1.

As illustrated in Fig. 2, since slot #3 is UL slot #3 in which all are a UL symbol, both HARQ-ACK and an SR are multiplexed on a single PUCCH (here, PUCCH for HARQ-ACK) and transmitted.

On the other hand, slot #7 is a D/U slot containing a DL symbol and a UL symbol, and the number of symbols available for an SR (i.e., 4) is smaller than the 13 symbols for the PUCCH for SR transmission given by the higher layer parameter (nrofSYmbols). Therefore, it is assumed that the UE does not transmit the PUCCH itself for periodic SR transmission.

However, as illustrated in Fig. 2, when another PUCCH (here, a PUCCH for HARQ-ACK) is assigned to one or more UL symbols in D/U slot #7, whether the UE multiplexes an SR to the other PUCCH and transmits becomes a problem. Although not illustrated, when another PUSCH is assigned to one or more UL symbols in D/U slot #7, similarly, whether the UE multiplexes an SR to the other PUSCH becomes a problem.

Therefore, a method in which in a slot (e.g., a D/U slot) in which the number of symbols that can be used for transmission of the PUCCH is smaller than the number of symbols configured in the PUCCH (e.g., indicated by the higher layer parameter (e.g., nrofSYmbols)), when the resource for the PUCCH overlaps with other uplink channels, the UE appropriately controls the transmission of the UCI contained in the PUCCH has been studied and the present invention has been achieved.

Hereinafter, the present embodiment will be described in detail with reference to the drawings. Note that the present embodiment can be applied to both of a case where a collision of one or more PUCCHs and a PUSCH occurs in the same slot and a case where a collision of a plurality of PUCCHs occurs in the same slot. Further, in the present embodiment, the number of symbols of the uplink channel (PUCCH or PUSCH) may be specified by the higher layer parameter (for example, nrofSYmbols) or by the downlink control information.

### (First Aspect)

In the first aspect, in the UE, when the number of symbols that can be used for transmission of a PUCCH in a slot is smaller than the number of symbols specified in the PUCCH and when the resource for the PUCCH overlaps a resource for another uplink channel, the UE may control the multiplexing of the UCI contained in the PUCCH with respect to the other uplink channel.

Here, the UCI may be UCI that is transmitted periodically, such as an SR, P-CSI, SP-CSI, HARQ-ACK for SPS, or may be UCI that is transmitted aperiodically, such as CSI that is triggered aperiodically (aperiodic CSI (A-CSI), HARQ-ACK for a PDSCH scheduled by DCI (DL assignment).

Further, the other uplink channel whose resource overlaps with the resource for the PUCCH in the slot may be at least one of one or more PUCCHs and one or more PUSCHs. When the other uplink channel is a plurality of PUCCHs, the UE may determine a single PUCCH from the plurality of PUCCHs based on a given identifier (for example, pseudo code) and control multiplexing of the UCI with respect to the single PUCCH. Further, when the other uplink channel is one or more PUCCHs and a PUSCH, the UE may control the multiplexing of the UCI with respect to the PUSCH.

Note that when the number of symbols that can be used for another uplink channel (for example, a PUCCH or PUSCH determined based on a pseudo code) on which the UCI included in the PUCCH can be multiplexed is smaller than the number of symbols specified for the other uplink channel, the UE need not transmit the other uplink channel.

On the other hand, when the number of symbols that can be used for another uplink channel (for example, a PUCCH or PUSCH determined based on a pseudo code) on which the UCI included in the PUCCH can be multiplexed is the number of symbols specified for the other uplink channel or more, the UE may multiplex the UCI to at least one of UCI or data included in another uplink channel and transmit the UCI using the other uplink channel.

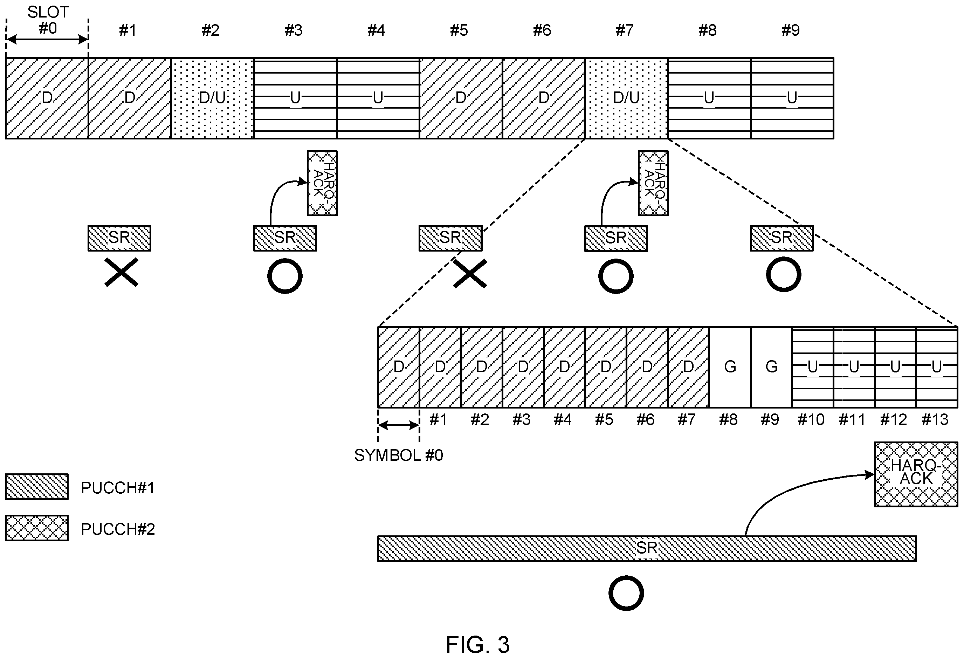

Fig. 3 is a diagram illustrating an example of UCI transmission control according to the first aspect. The preconditions in Fig. 3 are the same as in Fig. 2. The following mainly describes the difference from Fig. 2. In Fig. 3, a case where a plurality of PUCCHs (for example, PUCCH #1 for periodic SR transmission and PUCCH #2 for HARQ-ACK) overlap in D/U slot #7 will be described as an example.

As illustrated in Fig. 3, in D/U slot #7, the number of symbols that can be used for transmission of PUCCH #1 (that is, the number of UL symbols = 4) is smaller than the number of symbols specified in PUCCH #1 (here, 13). Further, in D/U slot #7, resources for PUCCH #1 including an SR (for example, symbols #0 to #12) overlap at least some of resources for PUCCH #2 including HARQ-ACK (for example, symbols #12 and #13).

Further, the number of symbols that can be used for transmission of PUCCH #2 (that is, the number of UL symbols = 4) in D/U slot #7 is equal to or more than the number of symbols specified in PUCCH #2 (here, 2). In D/U slot #7, the UE cancels the transmission of PUCCH #1, multiplexes an SR contained in PUCCH #1 with HARQ-ACK contained in PUCCH #2, and transmits using PUCCH #2.

Note that when the number of symbols that can be used for transmission of PUCCH #2 in D/U slot #7 is smaller than the number of symbols specified in PUCCH #2, the UE may cancel transmission of not only PUCCH #1 but also PUCCH #2.

Further, in D/U slot #7, when there is a plurality of PUCCHs that overlap at least some of the resources for PUCCH #1, the UE may determine a single PUCCH based on a pseudo code. The SR contained in PUCCH #1 and the UCI contained in the plurality of PUCCHs may be multiplexed in the single PUCCH.

Further, in D/U slot #7, when there is a PUSCH that overlaps at least some of the resources for PUCCH #1, the UE may multiplex the SR contained in PUCCH #1 and at least one of the data and UCI contained in the PUSCH, and transmit using the PUSCH.

Further, in D/U slot #7, when there is one or more PUCCHs and a PUSCH that overlap at least some of the resources for PUCCH #1, the UE may multiplex the SR contained in PUCCH #1 and the UCI and data contained in the one or more PUCCHs on the PUSCH.

Further, in Fig. 3, an example in which the SR is contained in PUCCH #1 is described, but any UCI such as SR, P-CSI, SP-CSI, A-CSI, HARQ-ACK, or the like may be included in PUCCH #1. Note that the HARQ-ACK may be, for example, at least one of HARQ-ACK for SPS and HARQ-ACK for a PDSCH scheduled by DL assignment. The same applies to the following.

In the first aspect, in a slot (for example, a D/U slot) where the number of symbols that can be used for transmission of the PUCCH is smaller than the number of symbols specified for the PUCCH, when the resource for the PUCCH overlaps another uplink channel, the UCI (for example, SR, P-CSI, SP-CSI, A-CSI, or HARQ-ACK) contained in the PUCCH can be transmitted without being dropped. Therefore, the UCI can be transmitted more flexibly.

### (Second Aspect)

In the second aspect, in the UE, when the number of symbols that can be used for transmission of a PUCCH in a slot is smaller than the number of symbols specified in the PUCCH and when the resource for the PUCCH overlaps a resource for another uplink channel, the UE drops the UCI contained in the PUCCH with respect to the other uplink channel. The following mainly describes the difference from the first aspect.

Here, the UCI drop may indicate at least one of stopping the transmission of the UCI and canceling the multiplexing of the UCI.

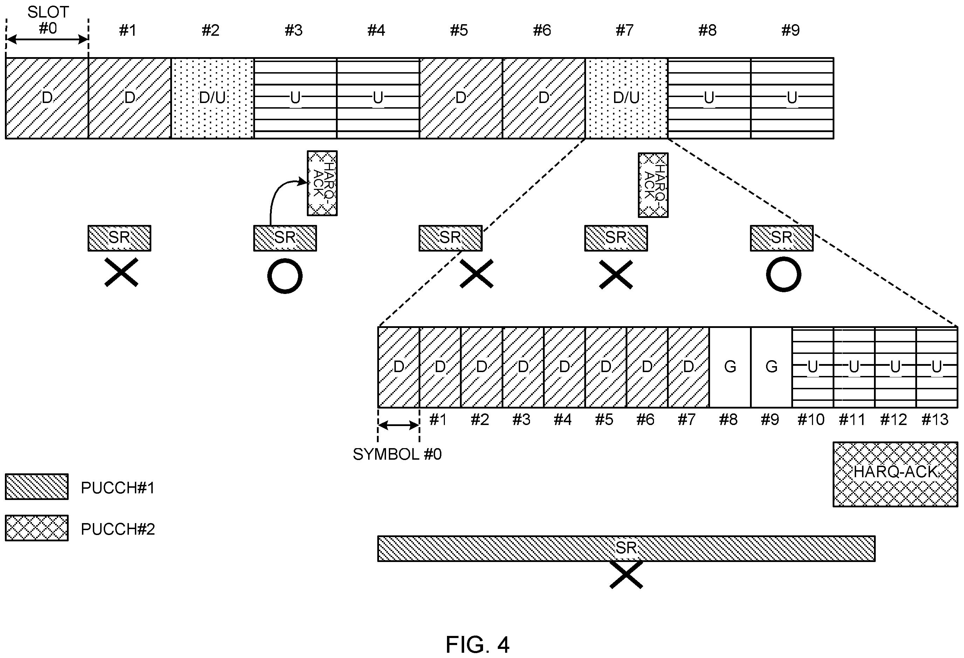

Fig. 4 is a diagram illustrating an example of UCI transmission control according to the second aspect. The preconditions in Fig. 4 are the same as in Fig. 3. The following mainly describes the difference from Fig. 3. In Fig. 4, in D/U slot #7, the UE drops the SR contained in PUCCH #1 regardless of whether the number of symbols that can be used for transmission of PUCCH #2 is smaller than the number of symbols for the PUCCH #2 given by the symbol number information.

Further, in D/U slot #7, when there is a plurality of PUCCHs that overlap at least some of the resources for PUCCH #1, when there is a PUSCH that overlaps at least some of the resources for PUCCH #1, and when there is one or more PUCCH and a PUSCH that overlap at least some of the resources for PUCCH #1, the UE may similarly drop the SR contained in PUCCH #1.

Further, in Fig. 3, an example in which the SR is contained in PUCCH #1 is described, but any UCI such as SR, P-CSI, SP-CSI, A-CSI, HARQ-ACK, or the like may be included in PUCCH #1.

In the second aspect, in a slot (for example, a D/U slot) where the number of symbols that can be used for transmission of the PUCCH is smaller than the number of symbols specified for the PUCCH, when the resource for the PUCCH overlaps another uplink channel, the UCI (for example, SR, P-CSI, SP-CSI, A-CSI, or HARQ-ACK) contained in the PUCCH is dropped. Therefore, it is possible to simplify the implementation of the UE at the time of collision between the PUCCH and another uplink channel.

### (Other Aspects)

The first and second aspects may be used alone or in combination. For example, when the number of symbols that can be used for transmission of a PUCCH in a slot is smaller than the number of symbols specified in the PUCCH and when the resource for the PUCCH overlaps a resource for another uplink channel, the UE may perform control as to which to apply in the slot: the first aspect or the second aspect, depending on whether the configuration of the slot is specified by the higher layer parameter.

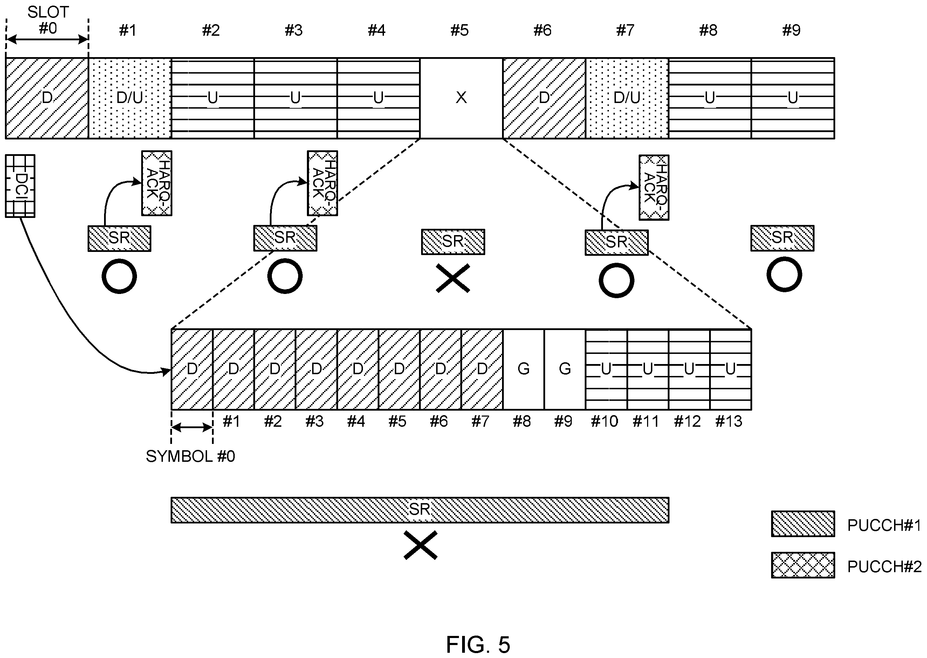

Fig. 5 is a diagram illustrating an example of UCI transmission control according to another aspect. In Fig. 5, the slot configurations of slots #0 to #4 and #6 to #9 are configured by the higher layer parameter. On the other hand, the slot configuration of slot #5 is specified by the downlink control information (DCI) (physical downlink control channel (PDCCH)) transmitted in slot #0.

Since the slot configuration of D/U slot #7 is specified by the higher layer parameter, it is easy to obtain a common understanding of the slot configuration between the base station and the UE. Therefore, the UE may perform the same control as in the first aspect (for example, Fig. 3) in D/U slot #7. For example, in D/U slot #7, the UE may cancel the transmission of PUCCH #1, multiplex an SR contained in PUCCH #1 with HARQ-ACK contained in PUCCH #2, and transmit using PUCCH #2.

On the other hand, since the slot configuration of slot #5 is specified by the DCI, if the UE fails to detect the DCI, it becomes difficult to obtain a common understanding of the slot configuration between the base station and the UE. Therefore, the UE may perform the same control as in the second aspect (for example, Fig. 4) in slot #5.

Further, in Figs. 3 to 5 above, the case where the repetition transmission is not applied to PUCCH #1 is illustrated, but even in the case where the PUCCH #1 is repeatedly transmitted in one or more slots, at least one of the first aspect and the second aspect can be applied.

Further, in the UE, when the number of symbols that can be used for transmission of a PUCCH in a slot is smaller than the number of symbols specified in the PUCCH and when the resource for the PUCCH overlaps a resource for another uplink channel, the UE may perform control as to which to apply in the slot: the first aspect or the second aspect, based on whether the UCI contained in the PUCCH is UCI that is periodically transmitted.

For example, when the number of symbols that can be used for transmission of a PUCCH in a slot is smaller than the number of symbols specified in the PUCCH and when the resource for the PUCCH overlaps a resource for another uplink channel, the UE may perform the same control as in the first aspect (e.g., control of D/U slot #7 in Fig. 3) in the slot when the UCI contained in the PUCCH is UCI that is aperiodically transmitted (e.g., at least one of A-CSI, SR and HARQ-ACK). On the other hand, when the UCI contained in the PUCCH is UCI that is periodically transmitted (e.g., at least one of SP-CSI, P-CSI, and HARQ-ACK for SPS), the same control as in the second aspect may be performed in the slot (for example, control of D/U slot #7 in Fig. 4).

Further, in the UE, when the number of symbols that can be used for transmission of a PUCCH in a slot is smaller than the number of symbols specified in the PUCCH and when the resource for the PUCCH overlaps a resource for another uplink channel, the UE may perform control as to which to apply in the slot: the first aspect or the second aspect, based on the type of UCI contained in the PUCCH.

For example, when the number of symbols that can be used for transmission of a PUCCH in a slot is smaller than the number of symbols specified in the PUCCH and when the resource for the PUCCH overlaps a resource for another uplink channel, the UE may perform the same control as in the first aspect (e.g., control of D/U slot #7 in Fig. 3) in the slot when the UCI contained in the PUCCH is at least one of HARQ-ACK, SR, and HARQ-ACK for SPS. On the other hand, when the UCI contained in the PUCCH is at least one of P-CSI and SP-CSI, the same control as in the second aspect may be performed in the slot (for example, control of D/U slot #7 in Fig. 4).

### (Radio Communication System)

A configuration of a radio communication system according to one embodiment of the present disclosure is hereinafter described. In this radio communication system, communication is performed using one or a combination of the radio communication methods according to the embodiments of the present disclosure.

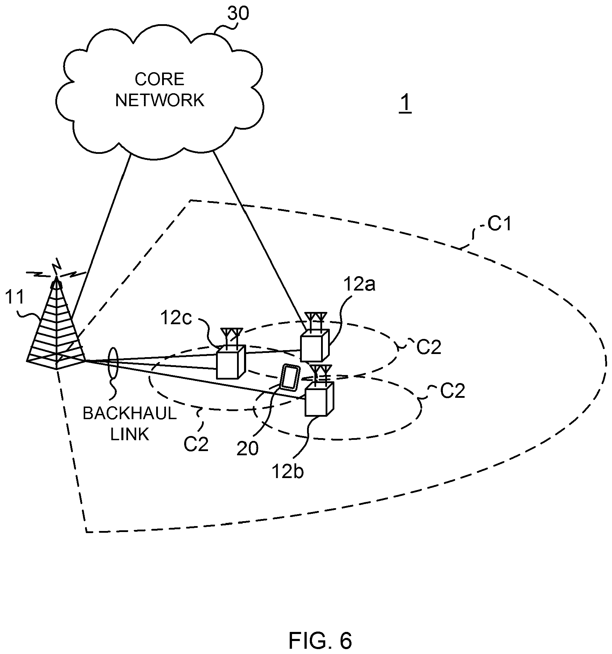

Fig. 6 is a diagram illustrating an example of a schematic configuration of a radio communication system according to one embodiment. A radio communication system 1 may be a system that implements communication using long term evolution (LTE), 5th generation mobile communication system new radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In EN-DC, an LTE (E-UTRA) base station (eNB) is a master node (MN), and an NR base station (gNB) is a secondary node (SN). In NE-DC, an NR base station (gNB) is MN, and an LTE (E-UTRA) base station (eNB) is SN.

The radio communication system 1 may support dual connectivity between a plurality of base stations in a single RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. User terminal 20 may be located in at least one cell. The arrangement, number, and the like of cells and the user terminal 20 are not limited to the aspects illustrated in the drawings. Hereinafter the base stations 11 and 12 will be collectively referred to as base stations 10 unless specified otherwise.

The user terminal 20 may be connected to at least one of the plurality of base stations 10. The user terminal 20 may use at least one of carrier aggregation and dual connectivity (DC) using a plurality of component carriers (CC).

Each CC may be included in at least one of a frequency range 1 (FR1) and a frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of FR1 and FR2 are not limited to these, and, for example, FR1 may correspond to a frequency range higher than FR2.

Further, the user terminal 20 may perform communication in each CC using at least one of time division duplex (TDD) and frequency division duplex (FDD).

The plurality of base stations 10 may be connected by wire (for example, an optical fiber or an X2 interface in compliance with common public radio interface (CPRI)) or wirelessly (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a physical downlink shared channel (PDSCH) shared by each user terminal 20, a physical broadcast channel (PBCH), a physical downlink control channel (PDCCH), or the like may be used.

Further, in the radio communication system 1, as an uplink channel, a physical uplink shared channel (PUSCH) shared by each user terminal 20, a physical uplink control channel (PUCCH), a physical random access channel (PRACH), or the like may be used.

User data, higher layer control information, and a system information block (SIB) and the like are transmitted by the PDSCH. The PUSCH may transmit user data, higher layer control information, and the like. Further, the PBCH may transmit a master information block (MIB).

The PDCCH may transmit lower layer control information. The lower layer control information may include, for example, downlink control information (DCI) including scheduling information of at least one of the PDSCH and the PUSCH.

Note that DCI that schedules the PDSCH may be referred to as DL assignment, DL DCI, or the like, and DCI that schedules the PUSCH may be referred to as UL grant, UL DCI, or the like. Note that the PDSCH may be replaced with DL data, and the PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or more search spaces. The UE may monitor the CORESET associated with a given search space based on search space configuration.

One SS may correspond to a PDCCH candidate corresponding to one or more aggregation levels. One or more search spaces may be referred to as a search space set. Note that "search space", "search space set", "search space configuration", "search space set configuration", "CORESET", "CORESET configuration", and the like in the present disclosure may be replaced with each other.

By means of the PUCCH, channel state information (CSI), delivery acknowledgement information (for example, hybrid automatic repeat request (HARQ-ACK), which may be referred to as ACK/NACK or the like), scheduling request (SR), and the like may be transmitted. By means of the PRACH, a random access preamble for establishing a connection with a cell may be transmitted.

Note that in the present disclosure, downlink, uplink, and the like may be expressed without "link". Further, various channels may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as the DL-RS.

The synchronization signal may be, for example, at least one of a primary synchronization signal (PSS) and a secondary synchronization signal (SSS). A signal block including SS (PSS or SSS) and PBCH (and DMRS for PBCH) may be referred to as an SS/PBCH block, an SSB (SS Block), and the like. Note that the SS, the SSB, or the like may also be referred to as a reference signal.

Further, in the radio communication system 1, a sounding reference signal (SRS), a demodulation reference signal (DMRS), and the like may be transmitted as an uplink reference signal (UL-RS). Note that, the DMRS may be referred to as a "user terminal-specific reference signal (UE-specific Reference Signal)".

### (Base station)

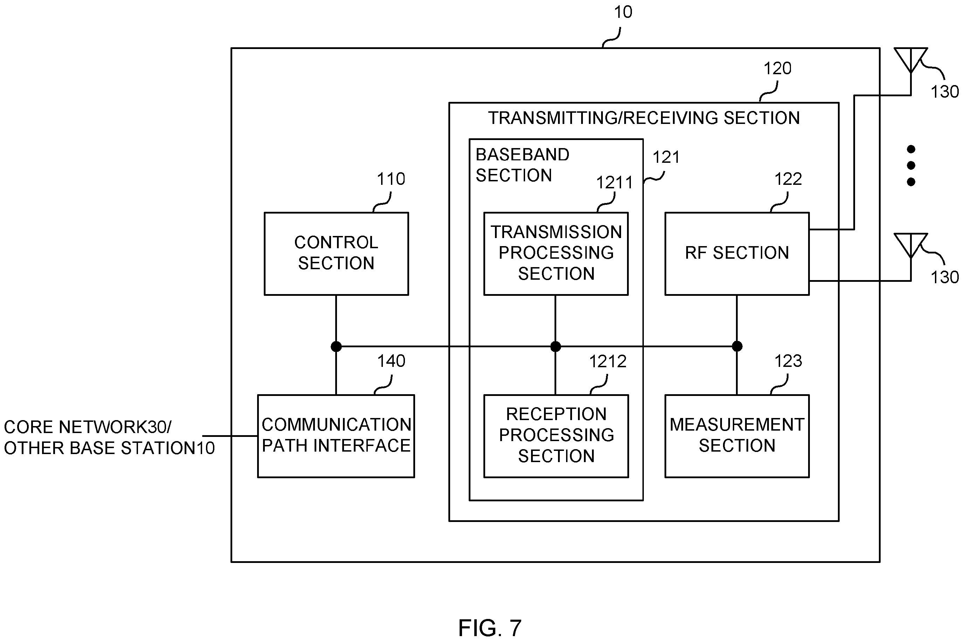

Fig. 7 is a diagram illustrating an example of a configuration of a base station according to one embodiment. The base station 10 includes a control section 110, a transmitting/receiving section 120, a transmission/reception antenna 130, and a communication path interface 140. Note that one or more of the control sections 110, one or more of the transmitting/receiving sections 120, one or more of the transmission/reception antennas 130, and one or more of the communication path interfaces 140 may be included.

Note that, although this example primarily indicates functional blocks of characteristic parts of the present embodiment, it may be assumed that the base station 10 has other functional blocks that are necessary for radio communication as well. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmission/reception antenna 130, and the communication path interface 140. The control section 110 may generate data to be transmitted as a signal, control information, a sequence, and the like, and may transfer the data, the control information, the sequence, and the like to the transmitting/receiving section 120. The control section 110 may perform call processing (such as configuration or release) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a baseband circuit, a filter, a phase shifter, a measurement circuit, a transmission/reception circuit, and the like, which are described based on common recognition in the technical field to which the present disclosure relates.

The transmitting/receiving section 120 may be constituted as an integrated transmitting/receiving section, or may be constituted by a transmitting section and a receiving section. The transmitting section may be constituted by the transmission processing section 1211 and the RF section 122. The receiving section may be constituted by the reception processing section 1212, the RF section 122, and the measurement section 123.

The transmission/reception antenna 130 can be constituted by an antenna described based on common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data or control information acquired from the control section 110 to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog transform on the bit string to be transmitted, and may output a baseband signal.

The transmitting/receiving section 120 (RF section 122) may perform modulation to a radio frequency band, filtering processing, amplification, and the like on the baseband signal, and may transmit a signal in the radio frequency band via the transmission/reception antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), signal to interference plus noise ratio (SINR), or signal to noise ratio (SNR)), signal strength (for example, received signal strength indicator (RSSI)), propagation path information (for example, CSI), and the like. The measurement result may be output to the control section 110.

The communication path interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmitting section and the receiving section of the base station 10 in the present disclosure may be constituted by at least one of the transmitting/receiving section 120, the transmission/reception antenna 130, and the communication path interface 140.

Note that the transmission/receiving section 120 may transmit various configuration information (for example, information indicating the slot configuration, information indicating the PUCCH configuration (e.g., the number of symbols), or the like). Further, the transmission/receiving section 120 may transmit a downlink signal (for example, PDCCH (DCI), PDSCH, downlink reference signal, or the like) and receive an uplink signal (for example, PUCCH, PUSCH, uplink reference signal, or the like).

### (User terminal)

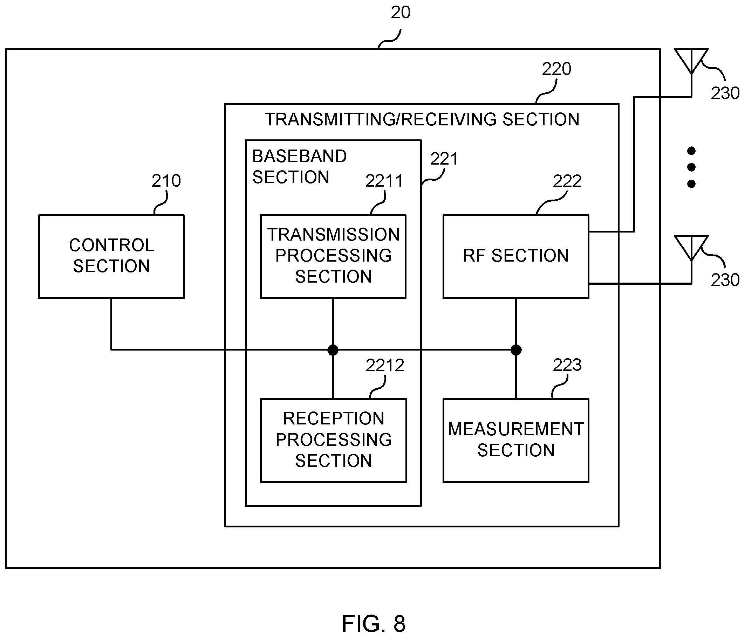

Fig. 8 is a diagram illustrating an example of a configuration of user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes a functional block which is a characteristic part of the present embodiment, it may be assumed that the user terminal 20 also has another functional block necessary for radio communication. A part of processing of each section described below may be omitted.

The control section 210 controls the entire user terminal 20. The control section 210 can be constituted by a controller, a control circuit, or the like, which is described based on common recognition in the technical field to which the present disclosure relates.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmission/receiving section 220.

The transmitting/receiving section 220 may include a baseband section 221, an RF section 222, and a measurement section 223. The baseband section 221 may include a transmission processing section 2211 and a reception processing section 2212. The transmission/receiving section 220 can be constituted by a transmitter/receiver, an RF circuit, a baseband circuit, a filter, a phase shifter, a measurement circuit, a transmission/reception circuit, and the like, which are described based on common recognition in the technical field to which the present disclosure relates.

The transmitting/receiving section 220 may be constituted as an integrated transmitting/receiving section, or may be constituted by a transmitting section and a receiving section. The transmitting section may be constituted by the transmission processing section 2211 and the RF section 222. The receiving section may be constituted by the reception processing section 2212, the RF section 222, and the measurement section 223.

The transmission/reception antenna 230 can be constituted by an antenna described based on common recognition in the technical field to which the present disclosure relates, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data or control information acquired from the control section 210 to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog transform on a bit string to be transmitted, and may output a baseband signal.

Note that whether or not to apply DFT processing may be based on configuration of transform precoding. When transform precoding is enabled for a channel (for example, PUSCH), the transmitting/receiving section 220 (transmission processing section 2211) may perform DFT processing as the transmission processing in order to transmit the channel using a DFT-s-OFDM waveform. When it is not the case, DFT processing need not be performed as the transmission processing.

The transmitting/receiving section 220 (RF section 222) may perform modulation to a radio frequency band, filtering processing, amplification, and the like on the baseband signal, and may transmit a signal in the radio frequency band via the transmission/reception antenna 230.

Meanwhile, the transmitting/receiving section 220 (RF section 222) may perform amplification, filtering processing, demodulation to a baseband signal, and the like on the signal in the radio frequency band received by the transmission/reception antenna 230.

The transmitting/receiving section 220 (reception processing section 2212) may acquire user data and the like by applying reception processing such as analog-digital transform, FFT processing, IDFT processing (if necessary), filtering processing, demapping, demodulation, decoding (which may include error correction decoding), MAC layer processing, RLC layer processing, or PDCP layer processing on the acquired baseband signal.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may be constituted by at least one of the transmitting/receiving section 220, the transmission/reception antenna 230, and the communication path interface 240.

Note that the transmitting/receiving section 220 may receive various configuration information (for example, information indicating the slot configuration, information indicating the PUCCH configuration (e.g., the number of symbols), or the like). Further, the transmitting/receiving section 120 may receive a downlink signal (for example, PDCCH (DCI), PDSCH, downlink reference signal, or the like) and transmit an uplink signal (for example, PUCCH, PUSCH, uplink reference signal, or the like).

When the number of symbols that can be used for transmission of an uplink control channel in the slot is smaller than the number of symbols specified for the uplink control channel and when the resource for the uplink control channel overlaps a resource for another uplink channel in the slot, the control section 210 may control the transmission of the uplink control information included in the uplink control channel.

When the number of symbols that can be used for the other uplink channel in the slot is equal to or greater than the number of symbols specified for the other uplink channel, the control section 210 may multiplex the uplink control information to the other uplink channel and perform transmission (first aspect).

When the number of symbols that can be used for the other uplink channel in the slot is smaller than the number of symbols specified for the other uplink channel, the control section 210 may cancel the transmission of the uplink control information (first aspect).

The slot configuration may be specified by higher layer parameters (other aspects).

Regardless of whether the number of symbols that can be used for the other uplink channel in the slot is smaller than the number of symbols specified for the other uplink channel, the control section 210 may cancel the transmission of the uplink control information (second aspect).

The slot configuration may be specified by the downlink control information (other aspects).

### (Hardware configuration)

Note that the block diagrams that have been used to describe the above embodiments illustrate blocks in functional units. These functional blocks (configuration units) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (using wires, radio, or the like, for example) and using these plural apparatuses. The functional blocks may be implemented by combining software with the above-described single apparatus or the above-described plurality of apparatuses.

Here, the function includes, but is not limited to, deciding, determining, judging, calculating, computing, processing, deriving, investigating, searching, ascertaining, receiving, transmitting, outputting, accessing, solving, selecting, choosing, establishing, comparing, assuming, expecting, considering, broadcasting, notifying, communicating, forwarding, configuring, reconfiguring, allocating, mapping, and assigning. For example, a functional block (configuration unit) that causes transmission to function may be called as a transmitting unit, a transmitter and the like. In any case, as described above, the implementation method is not particularly limited.

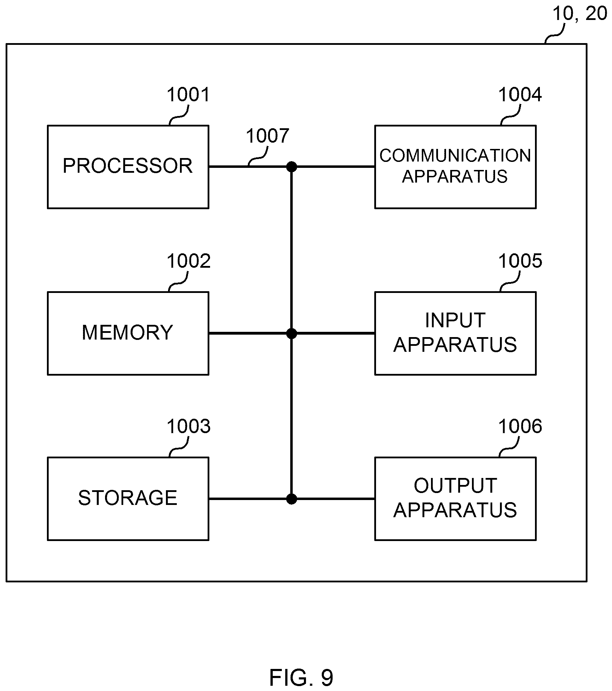

For example, the base station, the user terminal, and the like according to one embodiment of the present disclosure may function as a computer that executes the processing of the radio communication method of the present disclosure. Fig. 9 is a diagram illustrating an example of a hardware configuration of a base station and user terminal according to one embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may include one or more apparatuses illustrated in the drawing, or does not have to include some apparatuses.

For example, although only one processor 1001 is illustrated, a plurality of processors may be included. Further, the processing may be executed by one processor, or the processing may be executed in sequence, or in different manners, by two or more processors. Note that the processor 1001 may be implemented by one or more chips.

Each of functions of the base station 10 and the user terminal 20 is implemented by causing given software (program) to be read on hardware such as the processor 1001 or the memory 1002, thereby causing the processor 1001 to perform operation, controlling communication via the communication apparatus 1004, and controlling at least one of reading and writing of data in the memory 1002 and the storage 1003.

The processor 1001 controls the whole computer by, for example, running an operating system. The processor 1001 may be configured by a central processing unit (CPU) including an interface with peripheral equipment, a control apparatus, an operation apparatus, a register, and the like. For example, at least a part of the above-described control section 110(210), transmitting/receiving section 120(220), and the like may be implemented by the processor 1001.

Furthermore, the processor 1001 reads programs (program codes), software modules or data, from at least one of the storage 1003 and the communication apparatus 1004, into the memory 1002, and executes various processes according to these. As the program, a program to cause a computer to execute at least a part of the operation described in the above-described embodiment is used. For example, the control section 110(210) may be implemented by a control program that is stored in the memory 1002 and operates in the processor 1001, and another functional block may be implemented similarly.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a register, a cache, a main memory (primary storage apparatus), and the like. The memory 1002 can store executable programs (program codes), software modules and/or the like for implementing the radio communication methods according to embodiments of the present disclosure.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and other appropriate storage media. The storage 1003 may be referred to as "secondary storage apparatus".

The communication apparatus 1004 is hardware (transmitting/receiving device) for allowing inter-computer communication by using at least one of a wired network and a wireless network, and may be referred to as, for example, a network device, a network controller, a network card, a communication module and so on. The communication apparatus 1004 may be configured by a high frequency switch, a duplexer, a filter, a frequency synthesizer, and the like in order to implement, for example, at least one of frequency division duplex (FDD) and time division duplex (TDD). For example, the transmitting/receiving section 120(220), the transmission/reception antenna 130(230), and the like described above may be implemented by the communication apparatus 1004. The transmitting/receiving section 120(220) may be implemented by physically or logically separating a transmitting section 120a(220a) and a receiving section 120b(220b) from each other.

The input apparatus 1005 is an input device for receiving input from the outside (for example, a keyboard, a mouse, a microphone, a switch, a button, a sensor and so on). The output apparatus 1006 is an output device for performing outputting to the outside (for example, a display, a speaker, a light emitting diode (LED) lamp, and the like). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented using at least one of these pieces of hardware.

### (Variations)

Note that terms described in the present disclosure and terms necessary for understanding the present disclosure may be replaced with other terms that have the same or similar meanings. For example, a channel, a symbol, and a signal (or signaling) may be replaced with each other. Further, the signal may be a message. The reference signal can be abbreviated as an RS (reference signal), and may be referred to as a pilot, a pilot signal and the like, depending on which standard applies. Furthermore, a "component carrier (CC)" may be referred to as a "cell," a "frequency carrier," a "carrier frequency" and so on.

Furthermore, a radio frame may be comprised of one or a plurality of periods (frames) in the time domain. Each of one or more periods (frames) constituting a radio frame may be referred to as a subframe. Furthermore, a subframe may be constituted by one or more slots in the time domain. A subframe may be a fixed time duration (for example, 1 ms) not dependent on the numerology.

Here, numerology may be a communication parameter applied to at least one of transmission and reception of a given signal or channel. Numerology may indicate at least one of, for example, a subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, and a specific windowing processing performed by the transceiver in a time domain.

A slot may be comprised of one or a plurality of symbols in the time domain (OFDM (Orthogonal Frequency Division Multiplexing) symbols, SC-FDMA (Single Carrier Frequency Division Multiple Access) symbols, and so on). Also, a slot may be a time unit based on the numerology.

A slot may include a plurality of minislots. Each mini slot may be constituted by one or more symbols in the time domain. Further, a mini slot may be referred to as a subslot. Each mini slot may be constituted by fewer symbols than a slot. A PDSCH (or PUSCH) transmitted in a time unit larger than a mini slot may be referred to as PDSCH (PUSCH) mapping type A. PDSCH (or PUSCH) transmitted using a minislot may be referred to as PDSCH (PUSCH) mapping type B.

A radio frame, a subframe, a slot, a minislot, and a symbol all represent the time unit in signal communication. The radio frame, the subframe, the slot, the mini slot, and the symbol may be each called by other applicable names. Note that time units such as the frame, the subframe, the slot, the mini slot, and the symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, one to thirteen symbols), or may be a period longer than 1 ms. Note that the unit to represent the TTI may be referred to as a slot, a minislot and so on, instead of a subframe.

Here, TTI refers to a minimum time unit of scheduling in radio communication, for example. For example, in LTE systems, the base station schedules the radio resources (such as the frequency bandwidth and transmission power that can be used in each user terminal) to allocate to each user terminal in TTI units. Note that the definition of TTI is not limited thereto.

The TTI may be a transmission time unit of channel-encoded data packets (transport blocks), code blocks, codewords, or the like, or may be a unit of processing in scheduling, link adaptation, and so on. Note that, when a TTI is given, the period of time (for example, the number of symbols) in which transport blocks, code blocks, codewords, or the like are actually mapped may be shorter than the TTI.

Note that, when one slot or one minislot is referred to as a TTI, one or more TTIs (that is, one or more slots or one or more minislots) may be the minimum time unit of scheduling. Also, the number of slots (the number of minislots) to constitute this minimum time unit of scheduling may be controlled.

TTI having a time length of 1 ms may be referred to as usual TTI (TTI in 3GPP Rel. 8 to 12), normal TTI, long TTI, a usual subframe, a normal subframe, a long subframe, a slot, or the like. TTI shorter than normal TTI may also be referred to as shortened TTI, short TTI, partial TTI (or fractional TTI), a shortened subframe, a short subframe, a mini slot, a subslot, a slot, or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

The resource block (RB) is a resource allocation unit in a time domain and a frequency domain, and may include one or more consecutive subcarriers in the frequency domain. The number of subcarriers included in the RB may be the same regardless of the numerology, and may be 12, for example. The number of subcarriers included in the RB may be determined based on numerology.

Further, the RB may include one or more symbols in a time domain, and may have a length of one slot, one mini slot, one subframe, or one TTI. One TTI, one subframe, and the like may be each constituted by one or more resource blocks.

Note that one or a plurality of RBs may be referred to as a physical resource block (PRB (Physical RB)), a subcarrier group (SCG), a resource element group (REG), a PRB pair, an RB pair, and so on.

Furthermore, a resource block may be comprised of one or a plurality of resource elements (REs). For example, one RE may be a radio resource field of one subcarrier and one symbol.

A bandwidth part (BWP) (which may be referred to as a partial bandwidth or the like) may represent a subset of consecutive common resource blocks (RBs) for a given numerology in a given carrier. Here, the common RB may be specified by the index of the RB based on a common reference point of the carrier. The PRB may be defined in a given BWP and may be numbered within the BWP.

The BWP may include BWP for UL (UL BWP) and BWP for DL (DL BWP). For the UE, one or more BWPs may be configured within one carrier.

At least one of the configured BWPs may be active, and the UE need not assume that a given signal/channel is transmitted/received outside the active BWP. Note that "cell", "carrier", or the like in the present disclosure may be replaced with "BWP".

Note that the structures of the radio frame, subframe, slot, mini slot, symbol, and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in TTI, the length of a symbol, and the length of a cyclic prefix (CP) can be variously changed.

Further, the information, parameters, and the like described in the present disclosure may be represented using absolute values or relative values with respect to given values, or may be represented using other corresponding information. For example, a radio resource may be instructed by a given index.

The names used for parameters and the like in the present disclosure are in no respect limiting. In addition, an equation and the like using these parameters may differ from those explicitly disclosed in the present disclosure. Since various channels (physical uplink control channel (PUCCH), physical downlink control channel (PDCCH), and the like) and information elements can be identified by any suitable names, various names assigned to these various channels and information elements are not restrictive names in any respect.

The information, signals, and the like described in the present disclosure may be represented by using any one of various different technologies. For example, data, instruction, command, information, a signal, a bit, a symbol, a chip, or the like that may be mentioned throughout the above description may be represented by voltage, current, electromagnetic wave, magnetic field or magnetic particles, optical field or photons, or an arbitrary combination thereof.

Further, information, a signal, and the like can be output in at least one of a direction from a higher layer to a lower layer and a direction from a lower layer to a higher layer. Information, a signal, and the like may be input/output via a plurality of network nodes.

The input/output information, signal, and the like can be stored in a specific location (for example, a memory) or can be managed using a management table. The information, signals and the like to be input and output can be overwritten, updated or appended. The information, signals and the like that are output may be deleted. Information, signals, and the like that have been input may be transmitted to other apparatuses.

Notification of information may be performed not only by using the aspects/embodiments described in the present disclosure but also using another method. For example, notification of information in the present disclosure may be performed by using physical layer signaling (for example, downlink control information (DCI), uplink control information (UCI)), higher layer signaling (for example, radio resource control (RRC) signaling, broadcast information (master information block (MIB), system information block (SIB), or the like), medium access control (MAC) signaling), another signal, or a combination thereof.

Note that the physical layer signaling may be referred to as layer 1/layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message and the like. Further, notification of MAC signaling may be performed using, for example, a MAC control element (MAC CE).

Further, notification of given information (for example, notification of "being X") is not limited to explicit notification but may be performed implicitly (for example, by not performing notification of the given information or by performing notification of another piece of information).

Judging may be performed using values represented by one bit (0 or 1), may be performed using Boolean values represented by true or false, or may be performed by comparing numerical values (for example, comparison with a given value).

Software should be widely interpreted to mean, for example, instructions, instruction sets, codes, code segments, program codes, programs, subprograms, software modules, applications, software applications, software packages, routines, subroutines, objects, executable files, execution threads, procedures, and functions, regardless of whether being referred to as software, firmware, middleware, a microcode, and a hardware description language or by another name.

Further, software, instruction, information, and the like may be transmitted/received via a transmission medium. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology and the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be interchangeably used.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. When a base station accommodates a plurality of cells, the entire coverage area of the base station can be partitioned into multiple smaller areas, and each smaller area can provide communication services through base station subsystems (for example, indoor remote radio heads (RRHs)). The term "cell" or "sector" refers to a part or the whole of a coverage area of at least one of a base station and a base station subsystem that perform a communication service in this coverage.

In the present disclosure, the terms such as "mobile station (MS)", "user terminal", "user equipment (UE)", "terminal", and the like can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other appropriate terms.

At least one of the base station and the mobile station may be referred to as a transmission apparatus, a reception apparatus, a radio communication apparatus, and the like. Note that at least one of the base station and the mobile station may be a device mounted on a moving object, a moving object itself and the like. The moving object may be a transportation (for example, a car, an airplane and the like), an unmanned moving object (for example, a drone, an autonomous car, and the like), or a (manned or unmanned) robot. Note that at least one of the base station and the mobile station also includes an apparatus that does not necessarily move during a communication operation. For example, at least one of the base station and the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminal (which may be referred to as, for example, device-to-device (D2D), vehicle-to-everything (V2X) and the like). In this case, the user terminal 20 may be configured to have the functions of the base station 10 described above. Further, the wording such as "uplink" and "downlink" may be replaced with the wording corresponding to the terminal-to-terminal communication (for example, "side"). For example, the uplink channel, the downlink channel, and the like may be replaced with a side channel.

Similarly, a user terminal in the present disclosure may be replaced with a base station. In this case, the base station 10 may have the functions of the user terminal 20 described above.

In the present disclosure, the operation performed by the base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station), or a combination thereof.

The aspects/embodiments described in the present disclosure may be used individually or in combination, or may be switched in association with execution. Further, the order of processing procedures, sequences, flowcharts, and the like of the aspects/embodiments described in the present disclosure may be re-ordered as long as inconsistencies do not arise. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (New-RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined (for example, a combination of LTE or LTE-A and 5G) and applied.

The phrase "on the basis of" as used in the present disclosure does not mean "on the basis of only", unless otherwise specified. In other words, the phrase "on the basis of" means both "on the basis of only" and "on the basis of at least".

Any reference to an element using designations such as "first" and "second" used in the present disclosure does not generally limit the amount or order of these elements. These designations may be used in the present disclosure as a method convenient in distinguishing between two or more elements. Therefore, reference to the first and second elements does not mean that only two elements are adoptable, or that the first element must precede the second element in some way.

The term "deciding (determining)" used in the present disclosure may encompass a wide variety of operations. For example, "deciding (determining)" may be considered as "deciding (determining)" of judging, calculating, computing, processing, deriving, investigating, looking up, search, or inquiry (for example, looking up in a table, database, or another data structure), ascertaining, and the like.

Further, "deciding (determining)" may be considered as "deciding (determining)" of receiving (for example, receiving information), transmitting (for example, transmitting information), input, output, accessing (for example, accessing data in a memory), and the like.

Further, "deciding (determining)" may be considered as "deciding (determining)" of resolving, selecting, choosing, establishing, comparing, and the like. In other words, "deciding (determining)" may be considered as "deciding (determining)" of some operation.

Further, "deciding (determining)" may be replaced with "assuming", "expecting", "considering", and the like.

The term "maximum transmit power" described in the present disclosure may mean the maximum value of transmission power, the nominal UE maximum transmit power, or the rated UE maximum transmit power.

As used in the present disclosure, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

In the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy having wavelengths in a radio frequency domain, a microwave domain, and an optical (both visible and invisible) domain, or the like.

In the present disclosure, the phrase "A and B are different" may mean "A and B are different from each other". Note that the phrase may mean that "A and B are different from C". The terms such as "separated", "coupled", and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, for example, when translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided for the purpose of exemplification and explanation, and has no limitative meaning to the invention according to the present disclosure.

## Claims

1. A user terminal comprising:
a receiving section configured to receive information indicating a configuration of a slot; and
a control section configured to control transmission of uplink control information included in an uplink control channel when a number of symbols that can be used for transmission of the uplink control channel in the slot is smaller than a number of symbols specified for the uplink control channel and when a resource for the uplink control channel overlaps a resource for another uplink channel in the slot.

2. The user terminal according to claim 1, wherein, when a number of symbols that can be used for the other uplink channel in the slot is equal to or greater than a number of symbols specified for the other uplink channel, the control section multiplexes the uplink control information to the other uplink channel and performs transmission.

3. The user terminal according to claim 1 or 2, wherein, when a number of symbols that can be used for the other uplink channel in the slot is smaller than a number of symbols specified for the other uplink channel, the control section cancels transmission of the uplink control information.

4. The user terminal according to claim 2 or 3, wherein the configuration of the slot is specified by a higher layer parameter.

5. The user terminal according to claim 1, wherein regardless of whether a number of symbols that can be used for the other uplink channel in the slot is smaller than a number of symbols specified for the other uplink channel, the control section cancels transmission of the uplink control information.

6. The user terminal according to claim 2 or 5, wherein the configuration of the slot is specified by downlink control information.
